**Europäisches Patentamt**

**European Patent Office**

**Office européen des brevets**

(19)

(11) Numéro de publication: **0 031 981**
**B1**

(12) **FASCICULE DE BREVET EUROPEEN**

(45) Date de publication du fascicule du brevet: **23.11.83**

(51) Int. Cl.³: **B 64 B 1/58**

(21) Numéro de dépôt: **80201229.4**

(22) Date de dépôt: **22.12.80**

(54) **Procédé de réalisation d'une enveloppe de ballon, en particulier pour ballons spatiaux, enveloppe réalisée, et utilisation de celle-ci dans le domaine aérospatial.**

(30) Priorité: **04.01.80 FR 8000343**

(43) Date de publication de la demande:
**15.07.81 Bulletin 81/28**

(45) Mention de la délivrance du brevet:
**23.11.83 Bulletin 83/47**

(84) Etats contractants désignés:
**AT BE CH DE GB IT LI LU NL**

(56) Documents cités:
**FR - A - 2 418 150**
**GB - A - 130 657**
**LU - A - 81 569**
**US - A - 3 534 927**

(73) Titulaire: **CENTRE NATIONAL D'ETUDES SPATIALES**
**129, Rue de l'Université**
**F-75007 Paris (FR)**

(72) Inventeur: **Regipa, Robert**
**226 avenue Saint Exupéry Bâtiment Provence**
**F-31400 Toulouse (FR)**

(74) Mandataire: **Barre, Philippe**
**Cabinet Barre-Gatti-Laforgue 95 rue des Amidonniers**
**F-31069 Toulouse Cédex (FR)**

Courier Press, Leamington Spa, England.

Procédé de réalisation d'une enveloppe de ballon en particulier pour ballons spatiaux, enveloppe réalisée, et utilisation de celle-ci dans le domaine aérospatial

L'invention concerne un procédé de réalisation d'une enveloppe au moyen d'un matériau souple, en particulier en vue de confectionner un ballon spatial; elle s'étend à titre de produit nouveau aux enveloppes réalisées et, à titre d'utilisation de ce produit dans le domaine aérospatial, à un procédé de lancement d'un ballon spatial.

Les enveloppes des ballons stratosphériques connus ont, le plus souvent, une forme générale en goutte d'eau dont le profil précis est fonction du type de mission envisagée. Ces enveloppes sont généralement fariquées en assemblant une pluralité de fuseaux longitudinaux qui ont été découpés de façon précise avec les courbures appropriées pour permettre, après gonflage, l'obtention de la forme désirée. Ces fuseaux peuvent avoir des longueurs importantes, et les opérations de découpe le long de lignes courbes précises, puis d'assemblage le long des bords courbes obtenus, sont d'exécution longue et délicate, et obèrent dans une proportion notable le coût des ballons.

De plus, dans ce type de ballons, le matériau est soumis localement à des surtensions de valeurs relatives très élevées par rapport à la tension moyenne s'exerçant sur le matériau, de sorte qu'il est nécessaire d'utiliser un film surdimensionné sur le plan de la résistance mécanique, en vue de lui permettre de supporter ces surtensions locales. Le matériau se trouve ainsi très mal utilisé sur le plan mécanique; le coût du ballon et sa masse en sont sensiblement accrus.

Par ailleurs, les formes qui peuvent être obtenues autour de la forme générale en goutte d'eau, demeurent assez limitées et se trouvent mal adaptées à certains types de missions.

La présente invention se propose d'indiquer un nouveau procédé de réalisation d'enveloppes, permettant d'atténuer les inconvénients ci-dessus évoqués.

Un objectif de l'invention est en particulier de simplifier notablement les diverses opérations de fabrication en vue de réduire le coût des enveloppes obtenues.

Un autre objectif est d'assurer une meilleure utilisation du matériau en réduisant considérablement les tensions maximales locales s'exerçant sur le matériau de façon à éviter un surdimensionnement coûteux de celui-ci.

Un autre objectif est de fournir de nouvelles formes de ballons, susceptibles d'être mieux adaptées à certains types de missions; l'invention vise en particulier à fournir une forme de ballon, spécialement adaptée pour fonctionner en montgolfière infra-rouge.

Un autre objectif est de fournir des formes telles que les tensions qui s'exercent sur l'enveloppe gonflée ou remplie, présentent une répartition très approximativement homogène.

Par ailleurs, l'invention a également pour objectif, dans le domaine aérospatial, de faciliter les opérations de lancement des ballons obtenus par le procédé ci-dessus visé.

Un objectif est en particulier d'indiquer un nouveau procédé de lancement de ces ballons.

Un procédé connu pour la réalisation d'une enveloppe pour ballon spatial, consiste à réaliser au moyen d'un matériau souple, étanche et apte à supporter de faibles tensions tangentielles selon toutes les directions de son plan, une gaine sensiblement cylindrique se prolongeant par des portions extrêmes inférieure et supérieure, à rassembler les points du bord de la portion extrême inférieure sur l'axe de la gaine au niveau d'une zone dite pôle inférieur de l'enveloppe et à rassembler les points du bord de la portion extrême supérieure au niveau d'une zone dite pôle supérieur de l'enveloppe (un tel procédé est décrit dans le brevet LU—A—81569); selon l'invention on relie le pôle supérieur et le pôle inférieur par un lien non extensible ou peu extensible de longueur L et on ajuste la longueur L du lien précité en fonction de la forme d'enveloppe désirée.

L'utilisation d'une gaine cylindrique au niveau de l'équateur de l'enveloppe sur une hauteur notable de celle-ci conduit à une simplification considérable des opérations de fabrication de l'enveloppe, cependant que la présence du lien axial permet, par une opération facile de réglage de la distance entre les pôles, d'obtenir des formes diverses, fonctions de l'application envisagée; une partie des tensions de l'enveloppe (dépendant de la forme de celle-ci) est supportée par le lien axial, ce qui réduit les tensions s'exerçant sur le matériau souple de celle-ci, dans certains cas dans une proportion notable. De plus, on a pu constater que les surtensions locales sur le matériau de l'enveloppe sont proportionnellement très atténuées par rapport à celles qui s'exercent sur les enveloppes classiques, en particulier sur les enveloppes de ballons en forme de goutte d'eau.

Selon l'application envisagée la gaine cylindrique peut être réalisée de diverses façons. Elle peut être réalisée par assemblage d'une pluralité de fuseaux longitudinaux, lesquels présentent au niveau de ladite gaine une forme sensiblement rectangulaire qui en conditionne un découpe et un assemblage faciles et peu onéreux; elle peut également, dans d'autres applications, être obtenue directement sous forme de manchon tubulaire sortant d'une extrudeuse ou autre machine de fabrication.

Selon un premier mode de mise en oeuvre du procédé conforme à l'invention, les portions extrêmes qui prolongent la gaine cylindrique sont elles-mêmes approximativement cylindriques avec un rayon égal à celui de la gaine; les bords des portions extrêmes sont alors rassemblés aux pôles inférieur et supérieur par réalisation de plis le long desdites portions. Ce mode de mise en oeuvre conduit à une fabrication extrêmement bon marché, puisque, lors de sa découpe, l'enveloppe est entièrement cylindrique; ce mode de mise en oeuvre sera préféré en pratique dans les applications ou missions qui sont compatibles avec la présence de plis sur les portions supérieure et inférieure de l'enveloppe. En outre, ce mode de réalisation présente l'avantage d'accroître considérablement l'homogénéité des tensions s'appliquant par unité de surface du matériau de l'enveloppe.

Pour d'autres applications ou missions exigeant une enveloppe présentant peu de plis, on réalise celle-ci par assemblage de fuseaux longitudinaux, de forme sensiblement rectangulaire au niveau de la gaine cylindrique et se rétrécissant au niveau des portions extrêmes; ces fuseaux rectangulaires sur une partie importante de leur longueur, sont beaucoup plus faciles à découper et à assembler que dans le cas des enveloppes classiques, le travail de découpe et d'assemblage sur une largeur de fuseau variable se limitant aux portions extrêmes de l'enveloppe; en outre, la présence du lien qui reprend une partie des tensions et impose, pour une large part, sa forme finale à l'enveloppe gonflée ou remplie, réduit le caractère critique de la forme des fuseaux, lesquels peuvent être découpés et assemblés avec des tolérances beaucoup moins strictes.

Les fuseaux longitudinaux sus-évoqués peuvent être avantageusement assemblés, bord à bord, au moyen de bandes de renfort longitudinales, aptes à supporter une partie des efforts longitudinaux s'exerçant sur l'enveloppe et, en particulier, sur les parties supérieure et inférieure de celle-ci; cet assemblage peut notamment être réalisé conformément au procédé décrit dans le brevet français FR—A—2.133.453.

L'invention s'étend aux enveloppes à symétrie de révolution, réalisées par le procédé de l'invention; elle vise notamment des formes particulières d'enveloppes qui seront décrites en détail plus loin: enveloppes à fond aplati permettant notamment de réaliser des montgolfières infrarouges bénéficiant d'un excellent rendement, et enveloppes de forme générale cardio-cylindrique permettant d'assurer une bonne homogénéité des tensions.

Enfin, à titre d'utilisation des enveloppes sus-évoquées dans le domaine aérospatial, l'invention vise un procédé de lancement d'un ballon spatial réalisé conformément au procédé sus-évoqué; ce procédé de lancement consiste à libérer le pôle inférieur du lien de façon que ce pôle puisse coulisser le long dudit lien, à assurer l'expansion de l'enveloppe ayant pour effet d'amener le pôle inférieur à coulisser vers le pôle supérieur, et à assurer un blocage du pôle inférieur sur le lien lorsque ledit pôle inférieur parvient dans un position telle que la longueur de lien entre pôle supérieur et pôle inférieur soit égale à la longueur L appropriée.

Comme on le comprendra mieux plus loin, ce procédé permet d'obtenir la forme désirée et facilite sur le plan pratique les opérations de lancement.

D'autres caractéristiques, buts et avantages de l'invention se dégageront de la description qui suit en référence aux dessins annexés, lesquels présentent des exemples de réalisation destinés à illustrer l'invention; sur ces dessins:

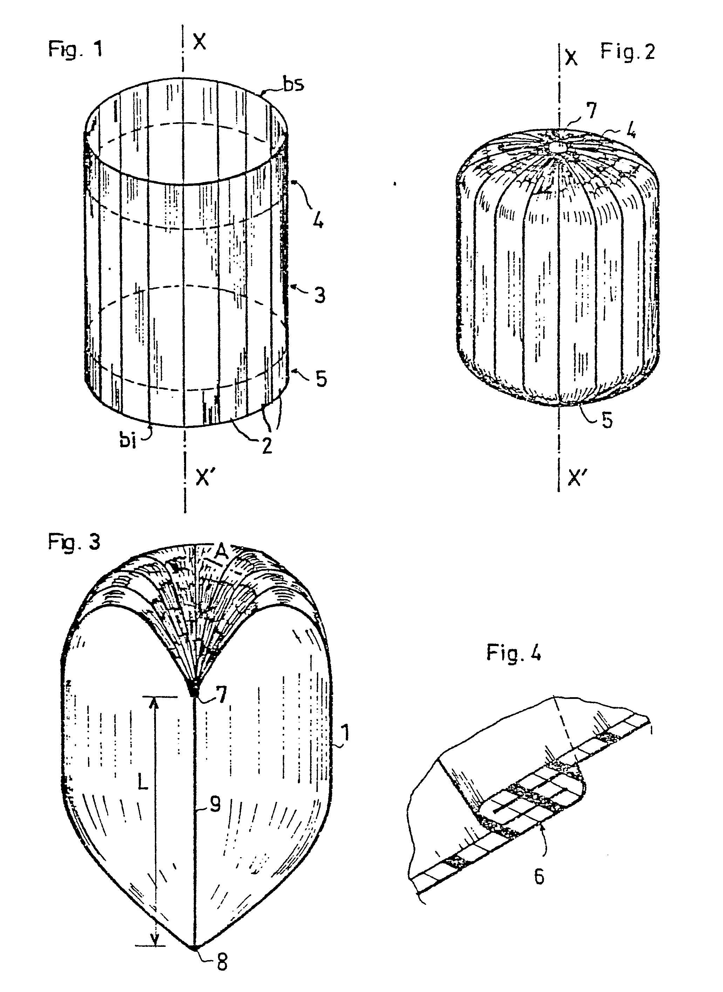

. les figures 1, 2 et 3 illustrent un mode de mise en oeuvre du procédé de l'invention, et la figure 4 est une coupe de détail de l'enveloppe obtenue selon un plan A normal à celle-ci,

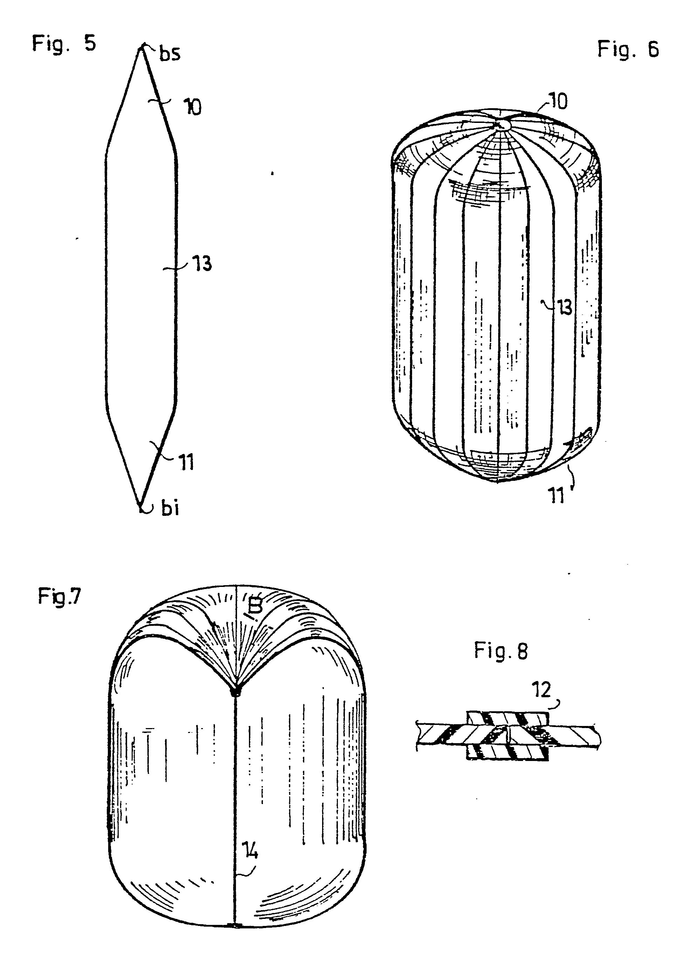

. les figures 5, 6 et 7 illustrent un autre mode de mise en oeuvre et la figure 8 est une coupe de détail de l'enveloppe obtenue, selon un plan B,

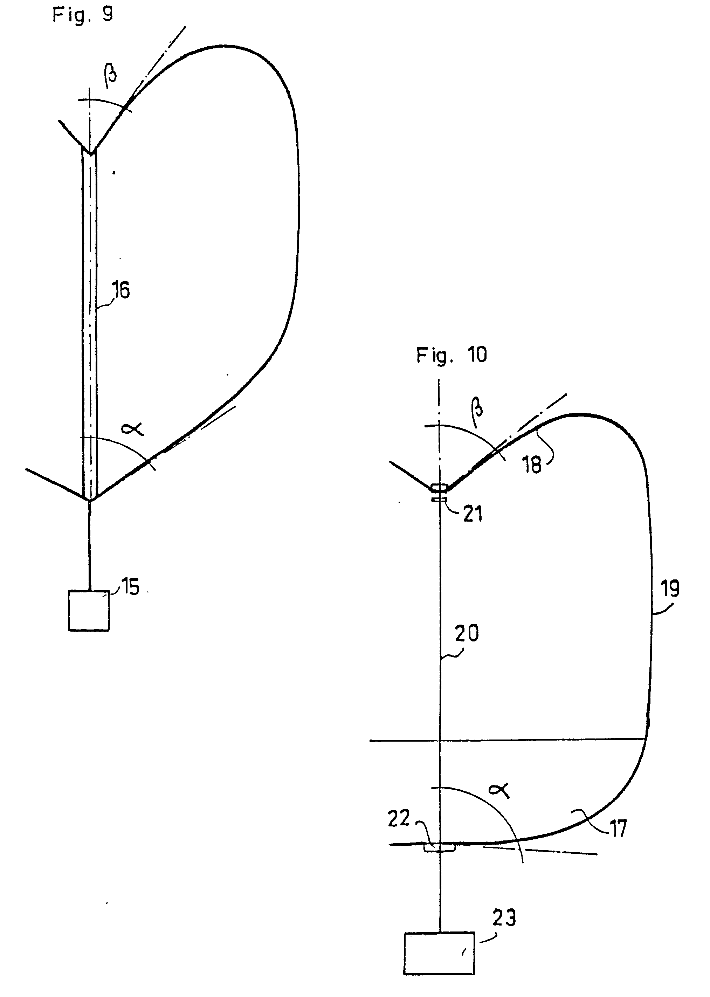

. la figure 9 est un schéma partiel illustrant un ballon de forme cardio-cylindrique, réalisé par le procédé de l'invention,

. la figure 10 est un schéma partiel illustrant une montgolfière infra-rouge à fond aplati, réalisée par le procédé de l'invention;

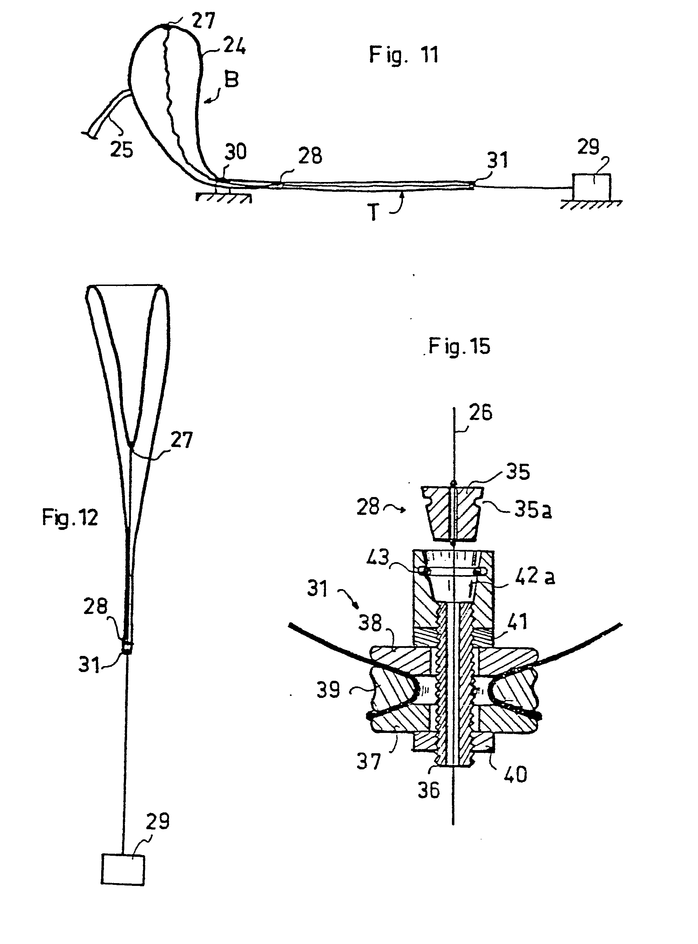

. les figures 11, 12, 13a, 13b, 14a et 14b schématisent des modes de lancement de ballons conformes à l'invention et la figure 15 est une coupe de détail d'organes d'encliquetage utilisés au cours dudit lancement.

L'enveloppe 1 schématisée à la figure 3 est réalisée en assemblant des fuseaux rectangulaires tels que 2 constitués en particulier en un film de polyéthylène apte à supporter des tensions tangentielles selon toutes les directions du plan du film (circonférentielles et longitudinales). Cet assemblage est effectué par tout moyen connu le long des bords rectilignes des fuseaux et permet d'obtenir une gaine cylindrique 3 se prolongeant en partie haute et en partie basse par des portions extrêmes 4 et 5, elles-mêmes cylindriques.

On conçoit qu'un tel ensemble cylindrique soit de fabrication simple et peu onéreuse.

Les points des bords $b_s$ et $b_i$ des portions 4 et 5 sont ensuite rassemblés sur l'axe XX' de la gaine grâce à la formation de plis 6 sur ces portions comme le représente la figure 4. A proximité de l'axe XX', les points des bords $b_s$ et $b_i$ sont fixés (fig. 2) sur des pièces en forme de disques 7 et 8 qui, selon l'application, peuvent être en un matériau souple ou rigide (ces pièces définissent les pôles inférieur et supérieur de l'enveloppe).

Les plis sur les portions 4 et 5 peuvent être laissés libres; il est également possible de fixer les unes sur les autres, localement ou de façon continue, les diverses épaisseurs de film formant chaque pli.

En outre, préalablement à la fermeture de l'enveloppe, un lien non extensible 9 qui peut être un câble, une manche, une bande résistante, etc., est mis en place entre les pièces 7 et 8.

La longueur L du lien 9 est ajustée dans chaque application en fonction des divers paramètres de l'enveloppe et de la mission envisagée (caractéristiques du matériau, masse des différents éléments et de la charge, caractéristiques du gaz de remplissage, caractéristiques de l'atmosphère ambiante dans laquelle doit être plongé le ballon) pour obtenir une forme désirée. A la figure 3, on a représenté une enveloppe de forme cardio-cylindrique qui permet d'abaisser considérablement les surtensions locales s'exerçant sur le matériau.

Les figures 5, 6, 7 et 8 illustrent un autre mode de mise en oeuvre du procédé au moyen de fuseaux 13 rectangulaires sur une partie de leur hauteur et se prolongeant par des portions extrêmes 10 et 11 de largeur décroissante.

Dans ce cas, on réduit considérablement l'importance des plis lorsqu'on rassemble sur l'axe les points des bords $b_s$ et $b_i$ des portions 10 et 11.

L'assemblage des fuseaux peut être réalisé comme le schématise la figure 8 au moyen de deux bandes de renfort telles que 12 thermosoudées de part et d'autre des fuseaux disposés bord à bord. Ces bandes sont prévues de résistance mécanique telle qu'elles soient aptes à supporter une partie des efforts longitudinaux s'exerçant sur l'enveloppe. De façon classique, elles peuvent par exemple être constituées par une épaisseur de polyester disposée entre deux épaisseurs de polyéthylène.

Les bords $b_s$ et $b_i$ sont fixés au niveau du pôle supérieur et du pôle inférieur sur des pièces en forme de disque, de la même façon que précédemment, et un lien non extensible 14 est disposé entre ces pôles pour les réunir. En l'exemple schématisé à la figure 7, la longueur de ce lien a été ajustée en fonction des divers paramètres pour obtenir une enveloppe à fond aplati.

Bien entendu, les exemples de mise en oeuvre sus-évoqués sont uniquement destinés à illustrer l'invention qui s'étend à toutes les variantes possibles.

On a schématisé à la figure 9 un ballon spatial de forme cardio-cylindrique rempli d'hélium et auquel est accrochée une charge 15. Le lien entre les pôles supérieur et inférieur est constitué par une manche souple et résistante 16, dont la longueur L a été ajustée de façon à homogénéiser au maximum la répartition des tensions s'appliquant sur le matériau.

L'expérience et les calculs ont montré que ce résultat était obtenu en ajustant cette longueur L de sorte que, dans chaque plan radial, l'angle $\alpha$ formé entre l'axe et la tangente à l'enveloppe au pôle inférieur ainsi que l'angle $\beta$ formé entre l'axe et la tangente au pôle supérieur soient approximativement compris entre 30° et 60°. Le choix précis de ces angles dans cette plage dépend des divers paramètres du ballon et des caractéristiques de la mission.

La figure 10 illustre un ballon du type montgolfière infra-rouge, dans lequel la longueur L du lien 20 entre pôle supérieur et pôle inférieur a été ajustée pour obtenir un fond aplati. A cet effet, cette longueur est réglée de sorte que, dans chaque plan radial, l'angle $\alpha$ (formé entre l'axe et la tangente à l'enveloppe au pôle inférieur) soit approximativement compris entre 92° et 100° et que l'angle $\beta$ (formé entre l'axe et la tangente à l'enveloppe au pôle supérieur) soit approximativement compris entre 30° et 60°.

Dans cette application, le fond aplati 17 de l'enveloppe, jusqu'à la limite de la portion cylindrique, est réalisé en un matériau transparent ou faiblement absorbant à l'égard des rayonnements infra-rouges, cependant que la partie supérieure 18 et la portion cylindrique 19 sont réalisées de façon à être sensiblement opaques au rayonnement infra-rouge et à absorber ce rayonnement. On pourra se reporter au brevet FR—A—2418150 pour plus de détails sur la façon d'obtenir un matériau ayant ces caractéristiques optiques. De façon traditionnelle, une soupape 21 est prévue au pôle supérieur, pour obturer ou découvrir une ouverture d'échappement et une ouverture permanente 22 est pratiquée au pôle inférieur pour permettre le remplissage naturel du ballon.

Le lien 20 entre pôle inférieur et pôle supérieur peut être constitué par un câble accroché en partie basse et haute sur un cerceau auquel il est réuni par des tubes radiaux. En partie basse, ce câble se prolonge pour soutenir la charge 23; en partie haute, le câble 20 peut servir à maintenir la soupape et ses moyens de manoeuvre.

La forme à fond aplati autorise un excellent rendement de captation des rayonnements infra-rouges provenant de la terre (ou plus généralement de la planète explorée). Les rayonnements captés sont absorbés par la portion cylindrique 19 et la portion supérieure 18 de la montgolfière et assurent un échauffement du gaz contenu dans l'enveloppe, de sorte que l'on obtient un aérostat autonome apte à être piloté par commande de la soupape supérieure.

Par ailleurs, la figure 11 illustre la première phase d'une opération de lancement d'un ballon conforme à l'invention, cependant que trois modes différents de mise en oeuvre de la seconde phase de lancement sont illustrés aux figures 12, 13a, 13b, 14a et 14b.

On a schématisé à ces figures avec les mêmes références, en 24 l'enveloppe au cours de gonflage, en 25 une manche de gonflage, en 26 le lien axial de l'enveloppe, en 27 et 28 les positions finales des pôles supérieur et inférieur de l'enveloppe correspondant à l'état de plénitude du ballon, et en 29 la charge accrochée à l'extrémité basse du lien 26.

La première phase du lancement (Fig. 11) consiste à réaliser par un gonflage approprié une bulle B dans la partie supérieure de l'enveloppe; cette partie supérieure est de façon classique, délimitée pendant cette phase par un étranglement 30 qui est maintenu au sol. En amont de cet étranglement, on aperçoit à la figure 11 la traîne T du ballon qui repose sur le sol.

L'extrémité amont de la traine T est dotée d'un organe 31 apte à coulisser le long du lien 26 et à s'encliquetter avec un organe conjugué, fixé en 28 sur le lien à la distance L du pôle supérieur 27.

Selon un premier mode de mise en oeuvre illustré à la figure 12, la seconde phase du lancement consiste ensuite à dégager l'enveloppe de l'étranglement 30, et à assurer un blockage par encliquettage de l'organe 31 sur l'organe 28, de façon à maintenir une distance L entre les pôles inférieur et supérieur; à cet effet, l'organe 31 est amené à coulisser le long du lien grâce à l'expansion du ballon qui est produite soit par gonflage à partir d'un point fixe au sol, soit au début de l'ascension dans le cas d'un lancement utilisant des ballons auxiliaires.

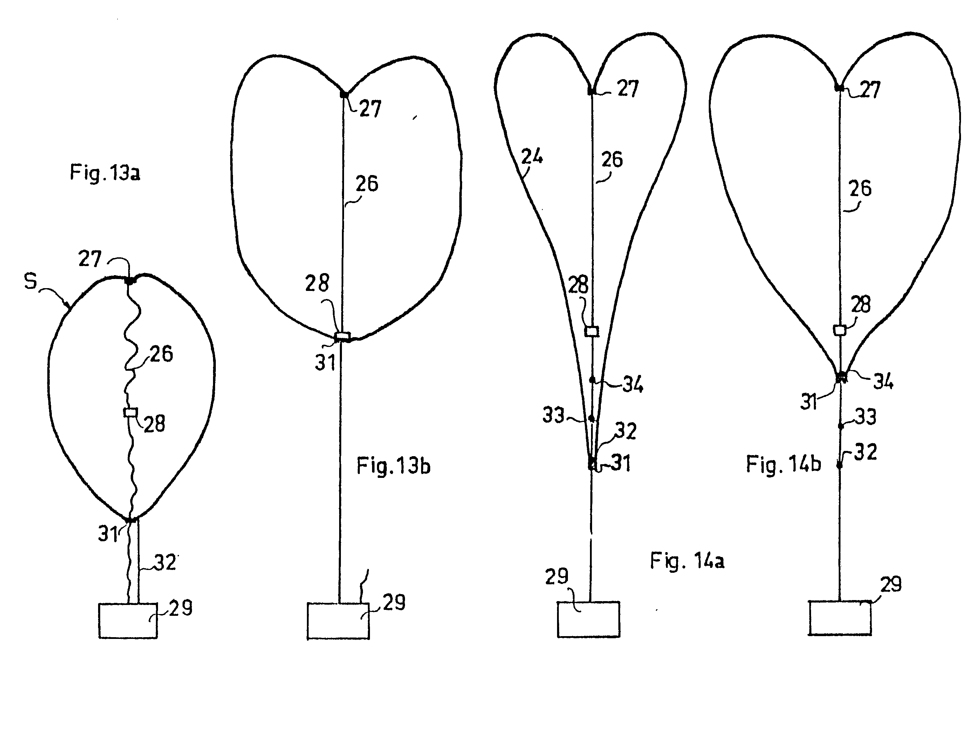

Selon un deuxième mode de mise en oeuvre illustré aux figures 13a et 13b, la seconde phase du lancement peut s'opérer en bloquant l'organe 31 situé en partie basse de l'enveloppe à une distance du pôle supérieur 27, très supérieure à la longueur L; dans ce mode de mise en oeuvre, cet organe 31 est bloqué sur le lien à peu près dans la position qu'il présente à la figure 11 à l'extrémité de la traine T.

Ce blocage provisoire peut en particulier être réalisé au moyen d'un lien auxiliaire 32 reliant la charge 29 et l'organe 31.

Lorsque la bulle B réalisée lors de la première phase a atteint une dimension suffisante, le ballon s'élève avec une forme provisoire allongée; son expansion se développe au cours de l'ascension (Fig. 13a) avec peu de risques que s'emmêle la partie basse de l'enveloppe, puisque la traîne T a entièrement disparue.

Le lien auxiliaire 32 est ensuite sectionné en vol, ce qui autorise le coulissement de l'organe 31 le long du lien axial 26 et son encliquettage avec l'organe 28 (Fig. 13b) à la distance L du pôle supérieur 27.

Ce mode de lancement présente l'avantage d'éviter que la partie basse de l'enveloppe risque de s'emmêler; toutefois, au cours de la période provisoire où le ballon n'a pas atteint son état de plénitude, des surtensions circonférentielles peuvent s'exercer sur la patie supérieure S de l'enveloppe qui présente une forme générale très approximativement conique.

Pour réduire ces surtensions, on préférera dans certaines applications un troisième mode de mise en oeuvre qui est illustré aux figures 14a et 14b.

Selon ce mode de mise en oeuvre, l'organe inférieur 31 de l'enveloppe est provisoirement bloqué sur le lien 26 dans une position intermédiaire entre les positions de la figure 12 et position de la figure 13a.

Ce blocage peut être réalisé, comme précédemment, au moyen d'un lien auxiliaire (plus long que le lien précédent) ou au moyen d'une pièce 32 d'arrêt provisoire contre laquelle vient buter l'organe 31.

En cours d'ascension, cet organe 31 est libéré et peut coulisser le long du lien au fur et à mesure de l'expansion du ballon. D'autres pièces d'arrêt telles que 33 et 34, peuvent le cas échéant être prévues le long du lien 26 pour permettre d'obtenir progressivement la forme de plénitude du ballon (Fig. 14b).

Notons que cette forme peut également être obtenue de façon progressive en prévoyant un système de freinage, télécommandé ou préréglé, en partie basse de l'enveloppe.

On peut ainsi au cours de l'ascension adapter la distance entre les pôles de l'enveloppe pour réduire les surtensions s'exerçant sur celle-ci, jusqu'à parvenir à l'état de plénitude correspondant à une distance définitive L entre les pôles 27 et 28.

Par ailleurs, la figure 15 est une vue de détail en coupe montrant à titre d'exemple l'organe d'encliquettage 31 qui est situé en partie basse de l'enveloppe; cet organe est adapté pour coulisser le long du lien 26 et pour pouvoir s'encliquetter sur un organe conjugué, lequel est fixé sur ce lien dans la position 28 que doit avoir le pôle inférieur dans l'état de plénitude du ballon.

Cet organe conjugué est constitué par une pièce tronconique 35, percée axialement d'une lumière à travers laquelle passe le lien 26; des noeuds réalisés sur le lien en amont et en aval de cette pièce ou tout autre moyen de fixation permettent de la fixer sur le lien.

Sur sa surface externe tronconique, cette pièce 35 comprend une gorge annulaire 35a en vue de son encliquetage.

L'organe 31 situé à la base de l'enveloppe comprend une tige filetée 36, percée le long de son axe pour permettre le passage du lien 26.

Autour de cette tige sont disposés deux disques de serrage 37 et 38 pourvus de façon classique de flancs coniques qui coopèrent avec une pièce torique 39 pour serrer le bord inférieur de l'enveloppe. Deux écrous 40 et 41 permettent de réaliser le serrage.

En outre, à l'extrémité de la tige 36 située du côté intérieur du ballon, est assujettie une pièce 42 pourvue d'un logement 42a aux flancs coniques, de forme conjuguée à la forme de la pièce 35. Cette pièce 42 contient une tige-ressort 43 qui est logée dans une rainure annulaire pour faire saillie dans le logement 42a.

La tige ressort 43 est adaptée pour pouvoir s'escamoter dans sa rainure au passage de la pièce 35 et est positionnée pour venir s'encliqueter dans la gorge 35a de cette pièce 35 en fin d'introduction de celle-ci dans le logement 42a.

L'exemple ci-dessus décrit en référence à la figure 15 a pour seul objectif d'illustrer un type possible d'organes d'encliquetage et il est évident que d'autres modes de réalisation peuvent être définis par l'homme du métier.

D'une façon générale, l'invention n'est pas limitée aux termes de la description mais en comprend toutes les variantes.

## Revendications

1. Procédé de réalisation d'une enveloppe de ballon, en particulier pour ballons spatiaux, consistant à réaliser au moyen d'un matériau souple, étanche et apte à supporter de faibles tensions tangentielles selon toutes les directions de son plan, une gaine sensiblement cylindrique (3) se prolongeant par des portions extrêmes inférieure (5) et supérieure (4), à rassembler les points $(b_i)$ du bord de la portion extrême inférieure sur l'axe de la gaine au niveau d'une zone dite pôle inférieur de l'enveloppe, à rassembler les points $(b_s)$ du bord de la portion extrême supérieure sur l'axe de la gaine au niveau d'une zone dite pôle supérieur de l'enveloppe, ledit procédé étant caractérisé en ce que l'on relie le pôle supérieur et le pôle inférieur par un lien (9) non extensible ou peu extensible de longueur L et l'on ajuste la longueur L du lien précité en fonction de la forme d'enveloppe désirée.

2. Procédé selon la revendication 1, dans lequel la gaine cylindrique (3) et ses portions extrêmes (4, 5) sont réalisées par assemblage de fuseaux longitudinaux, caractérisé en ce que chaque fuseau (13) présente une forme sensiblement rectangulaire au niveau de la gaine cylindrique et se rétrécit au niveau des portions extrêmes depuis une largeur égale à celle de la partie rectangulaire jusqu'à une largeur réduite au niveau des pôles.

3. Procédé selon la revendication 2, dans lequel les fuseaux (13) sont assemblés bord à bord au moyen de bandes de renfort longitudinales (12), aptes à supporter une partie des efforts longitudinaux s'exerçant sur l'enveloppe.

4. Procédé selon la revendication 1, caractérisé en ce que les portions extrêmes (4, 5) prolongeant la gaine cylindrique sont approximativement cylindriques avec un rayon égal à celui de ladite gaine, les points $(b_i, b_s)$ du bord de chaque portion extrême étant rassemblés aux pôles inférieur et supérieur par réalisation de plis (6) le long desdites portions extrêmes.

5. Procédé selon l'une des revendications 1, 2, 3 ou 4, pour la fabrication d'une enveloppe de ballon à fond aplati, caractérisé en ce que la longueur L du lien est ajustée de sorte que, dans chaque plan radial, l'angle $\alpha$ formé entre l'axe et la tangente à l'enveloppe au pôle inférieur soit approximativement compris entre 92° et 100°, et que l'angle $\beta$ formé entre l'axe et la tangente à l'enveloppe au pôle supérieur soit approximativement compris entre 30° et 60°.

6. Procédé selon la revendication 5, dans lequel le fond aplati (17) de l'enveloppe est réalisé en un matériau transparent ou faiblement absorbant à l'égard du rayonnement infra-rouge, cependant que la portion supérieure (18) et la portion cylindrique (19) de ladite enveloppe sont réalisées de façon à être sensiblement opaques au rayonnement infra-rouge et à absorber ce rayonnement.

7. Procédé selon l'une des revendications 1, 2, 3 ou 4, pour la fabrication d'une enveloppe de forme générale cardio-cylindrique, caractérisé en ce que la longueur L du lien est ajustée de sorte que, dans chaque plan radial, l'angle $\alpha$ formé entre l'axe et la tangente à l'enveloppe au pôle inférieur ainsi que l'angle $\beta$ formé entre l'axe et la tangente à l'enveloppe au pôle supérieur soient approximativement compris entre 30° et 60°.

8. Enveloppe à symétrie de révolution autour d'un axe, caractérisée en ce qu'elle est réalisée par le procédé conforme à l'une des revendications 1, 2, 3, 4, 5, 6 ou 7, et comprend une portion approximativement cylindrique et un pôle inférieur et un pôle supérieur situés sur l'axe de révolution et reliés entre eux par un lien non extensible ou peu extensible.

9. Enveloppe de ballon spatial selon la revendication 8 dans laquelle le lien précité se prolonge au-dessous du pôle inférieur et maintient une charge.

10. Procédé de lancement d'un ballon spatial conforme à la revendication 9, caractérisé en ce qu'il consiste à libérer le pôle inférieur du lien de façon que ce pôle puisse coulisser le long dudit lien, à assurer l'expansion de l'enveloppe, ayant pour effet d'amener le pôle inférieur à coulisser vers le pôle supérieur et à assurer un blocage du pôle inférieur sur le lien lorsque ledit pôle inférieur parvient dans une position telle que la longueur du lien entre pôle supérieur et pôle inférieur soit égale à la longueur L appropriée.

11. Procédé de lancement selon la revendication 10 dans lequel l'expansion de l'enveloppe s'effectue en deux temps, un premier temps de gonflage réalisé au sol pour l'obtention d'une bulle (B) dans la partie supérieure de l'enveloppe, cette partie étant délimitée par un étranglement (30) maintenu au sol, un second temps, après libération de l'étranglement, au terme duquel l'état de plénitude du ballon est obtenu, ledit procédé étant caractérisé en ce que le pôle inférieur est bloqué à la distance L du pôle supérieur après le premier temps de gonflage, préalablement au second temps d'expansion permettant l'obtention de l'état de plénitude.

12. Procédé de lancement selon la revendication 10 dans lequel l'expansion de l'enveloppe s'effectue en deux temps, un premier temps de gonflage réalisé au sol pour l'obtention d'une bulle (B) dans la partie supérieure de l'enveloppe, cette partie étant délimitée par un étranglement (30) maintenu au sol, un second temps, après libération de l'étranglement, au terme duquel l'état de plénitude du ballon est obtenu, ledit procédé étant caractérisé en ce que, au cours du second temps d'expansion de l'enveloppe, le pôle inférieur est bloqué à une distance du pôle supérieur, supérieure à la longueur L, et est ensuite libéré en cours de vol pour coulisser le long du lien et venir se bloquer en fin d'expansion à la distance L du pôle supérieur.

13. Procédé de lancement selon la revendication 12, caractérisé en ce qu'un lien auxiliaire (32) est mis en place entre la charge et le pôle inférieur de façon à maintenir provisoirement une distance entre pôle inférieur et pôle supérieur, supérieure à la longueur L, ce lien auxiliaire étant ensuite sectionné en vol au cours du second temps d'expansion, pour libérer ledit pôle inférieur et autoriser son coulissement le long du lien principal et son blocage dans la position appropriée.

14. Procédé de lancement selon l'une des revendications 10, 11, 12 ou 13, caractérisé en ce que le blocage du pôle inférieur sur le lien est réalisé par encliquettage d'un organe (31) solidaire dudit pôle avec un organe conjugué (35) fixé sur le lien à la distance L du pôle supérieur.

## Patentansprüche

1. Verfahren zur Herstellung einer Ballonhülle, insbesondere für Raumfahrtballons, welche darin besteht, dass man aus einem biegsamen, dichten und zur Aufnahme niedriger Tangentialdrücke in allen Richtungen seiner Fläche befähigten Werkstoff eine ungefähr zylinderförmige, sich in einem unteren (5) und einem oberen (4) Endabschnitt fortsetzende Hülse (3) herstellt, die Randstellen ($b_i$) des unteren Endabschnitts auf der Hülsenachse eines Bereichs, des sog. unteren Pols der Hülle, zusammenfügt und die Randstellen ($b_s$) des oberen Endabschnitts auf der Hülsenachse auf der Höhe eines Bereichs, des sog oberen Pols der Hülle, zusammenfügt, wobei besagtes Verfahren dadurch gekennzeichnet ist, dass man den oberen Pol und den unteren Pol mit einem nicht dehnbaren oder wenig dehnbaren Bindeglied (9) mit einer Länge L verbindet und die Länge L des vorgenannten Bindeglieds der gewünschten Hüllenform entsprechend einstellt.

2. Verfahren nach Anspruch 1, bei welchem die zylinderförmige Hülse und ihre Endabschnitte (4, 5) durch Zusammenfügen von länglichen Zwickeln hergestellt werden, dadurch gekennzeichnet, dass die Zwickel (13) jeweils eine etwa rechteckige Form auf der Höhe der zylinderförmuger Hülse aufweisen und sich auf der Höhe der Endabschnitte von einer Breite, welche der des rechteckigen Teils gleich ist, bis zu einer verminderten Breite auf der Höhe der Pole verjüngen.

3. Verfahren nach Anspruch 2, bei welchem die Zwickel (13) mit ihren Rändern mittels länglicher Verstärkungsstreifen (12) zusammengefügt werden, die befähigt sind, die auf die Hülle ausgeübten Längskräfte teilweise aufzunehmen.

4. Verfahren nach Anspruch 1, dadurch gekennzeichnet, dass die die zylinderförmige Hülse fortsetzenden Endabschnitte (4, 5) etwa zylinderförmig sind mit einem dem besagter Hülse gleichen Radius, wobei die Randstellen ($b_i$, $b_s$) des jeweiligen Endabschnitts an dem unteren und dem oberem Pol durch Bildung von Falten (6) längs besagter Endabschnitte zusammengefügt werden.

5. Verfahren nach einem der Ansprüche 1, 2, 3 oder 4 zur Herstellung einer Ballonhülle mit flachem Boden, dadurch gekennzeichnet, dass die Länge L des Bindeglieds so eingestellt wird, dass in der jeweiligen radialen Ebene der zwischen der Achse und der Tangente an die Hülle am unteren Pol gebildete Winkel $\alpha$ etwa zwischen 92° und 100° liegt und der zwischen der Achse und der Tangente an die Hülle am oberen Pol gebildete Winkel $\beta$ etwa zwischen 30° und 60° liegt.

6. Verfahren nach Anspruch 5, bei welchem der flache Boden (17) der Hülle aus einem durchsichtigen oder infrarote Strahlungen schwach absorbierenden Werkstoff hergestellt wird, während der obere Teil (18) und der zylinderförmige Abschnitt (19) besagter Hülle so hergestellt werden, dass sie für infrarote Strahlung im wesentlichen undurchdringlich sind und diese Strahlung absorbieren.

7. Verfahren nach einem der Ansprüche 1, 2, 3 oder 4, zur Herstellung einer allgemein cardiozylinder-förmigen Hülle, dadurch gekennzeichnet, dass die Länge L des Bindeglieds so eingestellt wird, dass in der jeweiligen radialen Ebene der zwischen der Achse und der Tangente an die Hülle am unteren Pol gebildete Winkel $\alpha$ und der zwischen der Achse und der Tangente an die Hülle am oberen Pol gebildete Winkel $\beta$ etwa zwischen 30° und 60° liegen.

8. Um eine Achse rotationssymmetrische Hülle, dadurch gekennzeichnet, dass sie nach dem Verfahren gemäss eines der Ansprüche 1, 2, 3, 4, 5, 6 oder 7 hergestellt ist und einen etwa zylinderförmigen Abschnitt sowie einen unteren Pol und einen oberen Pol umfasst, die auf der Rotationsachse liegen und miteinader durch ein nicht dehnbares oder wenig dehnbares Bindeglied verbunden sind.

9. Raumfahrtballonhülle nach Anspruch 8, bei welcher sich das vorerwähnte Bindeglied unter dem unteren Pol fortsetzt und eine Last trägt.

10. Start-Verfahren für einen Raumfahrtballon gemäss Anspruch 9, dadurch gekennzeichnet, dass es darin besteht, dass man den unteren Pol von dem Bindeglied so freisetzt, dass dieser Pol dem besagten Bindeglied entlang gleiten kann, dass man die Ausdehnung der Hülle bewirkt, was dazu führt, dass man den unteren Pol dem oberen Pol entgegengleiten lässt und dass man Sperrung des unteren Pols auf dem Bindeglied bewirkt, wenn besagter unterer Pol in solch eine Lage gelangt, dass die Länge des Bindeglieds zwischen oberem Pol und unterem Pol gleich der entsprechenden Länge L ist.

11. Start-Verfahren nach Anspruch 10, bei welchem die Ausdehnung der Hülle in zwei Stufen erfolgt, einer ersten Aufblähungsstufe, die auf dem Erdboden zur Erzeugung einer Blase (B) im oberen Teil der Hülle durchgeführt wird, wobei dieser Teil durch eine am Erdboden gehaltene Klemme (30) begrenzt ist, und einer zweiten Stufe nach der Lösung der Klemme, im Laufe derselben der Vollzustand des Ballons erhalten wird, wobei besagtes Verfahren dadurch gekennzeichnet ist, dass der untere Pol mit Abstand L vom oberen Pol nach der ersten Aufblähungsstufe gesperrt wird, vor einer zweiten Ausdehnungsstufe, die das Erhalten des Vollzustands ermöglicht.

12. Start-Verfahren nach Anspruch 10, bei welchem die Ausdehnung der Hülle in zwei Stufen erfolgt, einer ersten Aufblähungsstufe, die auf dem Erdboden zur Erzeugung einer Blase (B) im oberen Teil der Hülle durchgeführt wird, wobei dieser Teil durch eine am Erdboden gehaltene Klemme (30) begrenzt ist, und einer zweiten Stufe nach der Lösung der Klemme, im Laufe derselben der Vollzustand des Ballons erhalten wird, wobei besagtes Verfahren dadurch gekennzeichnet ist, dass im Laufe der zweiten Ausdehungsstufe der Hülle der untere Pol mit einem Abstand vom oberen Pol gesperrt wird, welcher grösser als die Länge L ist, und dann freigesetzt wird, um dem Bindeglied entlang zu gleiten und am Ende der Ausdehnung mit Abstand L vom oberen Pol gesperrt zu werden.

13. Start-Verfahren nach Anspruch 12, dadurch gekennzeichnet, dass ein Hilfsbindeglied (32) zwischen der Last und dem unteren Pol derart angeordnet ist, dass vorübergehend ein grösserer Abstand als die Länge L zwischen unterem Pol und oberem Pol aufrechterhalten wird, wobei dieses Hilfsbindeglied dann im Fluge im Laufe der zweiten Ausdehnungsstufe abgenommen wird, um besagten unteren Pol freizusetzen und sein Gleiten dem Hauptbindeglied entlang und seine Sperrung in der entsprechenden Lage zu ermöglichen.

14. Start-Verfahren nach einem der Ansprüche 10, 11, 12 oder 13, dadurch gekennzeichnet, dass die Sperrung des unteren Pols auf dem Bindeglied durch Eingreifen eines mit besagtem Pol einstrückigen Organs (31) in ein gekuppeltes Organ (35) herbeigeführt wird, welches auf dem Bindeglied mit Abstand L vom oberem Pol befestigt ist.

## Claims

1. Process for the production of a balloon envelope, particularly for space balloons, which consists in producing from a flexible, fluid-tight material, capable of absorbing low tangential pressures in all directions of its plane, an approximately cylindrical sheath (3), extending in a lower (5) and an upper (4) end portion, bringing together the edge points ($b_i$) of the lower end portion on the axis of the sheath at the level of a zone, the so-called lower pole of the envelope, bringing together the edge points ($b_s$) of the upper end portion on the axis of the sheath at the level of a zone, the so-called upper pole of the envelope, said process being characterised in that the upper pole and the lower pole are connected by a non-extensible or slightly extensible link (9), having a length L, and that the length L of the aforementioned link is adjusted, depending on the desired envelope shape.

2. Process according to Claim 1, in which the cylindrical sheath (3) and its end portions (4, 5) are produced by joining elongate gores, characterised in that each gore (13) has an approximately rectangular shape at the level of the cylindrical sheath and tapers at the level of the end portions from a width equal to that of the rectangular part to a reduced width at the level of the poles.

3. Process according to Claim 2, in which the gores (13) are joined edge to edge by means of elongate reinforcement strips (12), capable of absorbing part of the longitudinal forces exerted on the envelope.

4. Process according to Claim 1, characterised in that the end portions (4, 5), extending the cylindrical sheath, are approximately cylindrical and have a radius equal to that of said sheath, the edge points ($b_i$, $b_s$) of each end portion being brought together at the upper and lower poles by forming folds (6) along said end portions.

5. Process according to one of the Claims 1, 2, 3 or 4 for the manufacture of a balloon envelope having a flat bottom, characterised in that the length L of the link is adjusted so that, in each radial plane, the angle $\alpha$, formed between the axis and the tangent on the envelope at the lower pole, lies approximately between 92° and 100° and the angle $\beta$, formed between the axis and the tangent on the envelope at the upper pole, lies approximately between 30° and 60°.

6. Process according to Claim 5, in which the flat bottom (17) of the envelope is made of a material that is transparent to, or shows slight absorption of, infra-red radiation, whereas the upper portion (18) and the cylindrical portion (19) of said envelope are made so as to be essentially opaque to infra-red radiation and to absorb that radiation.

7. Process according to one of the Claims 1, 2, 3 or 4 for the manufacture of an envelope of generally cardio-cylindrical shape, characterised in that the length L of the link is adjusted so that, in each radial plane, the angle $\alpha$, formed between the axis and the tangent on the envelope at the lower pole, and the angle $\beta$, formed between the axis and the tangent on the envelope at the upper pole, lie approximately between 30° and 60°.

8. Envelope having rotational symmetry about an axis, characterised in that it is produced by the process according to one of the Claims 1, 2, 3, 4, 5, 6 or 7 and comprises an approximately cylindrical portion and a lower pole and an upper pole, situated on the axis of rotation and connected to one another by a non-extensible or slightly extensible link.

9. Space balloon envelope according to Claim 8, in which the aforementioned link extends under the lower pole and supports a load.

10. Process for the launching of a space balloon in accordance with Claim 9, characterised in that it consists in releasing the lower pole from the link, so that this pole is able to slide along said link, bringing about the expansion of the envelope, resulting in the lower pole being made to slide towards the upper pole and causing the lower pole to be locked on the link when said lower pole reaches a position such that the length of the link between upper pole and lower pole is equal to the appropriate length L.

11. Launching process according to Claim 10, in which the expansion of the envelope takes place in two stages, a first inflation stage, carried out on the ground, for producing a bubble (B) in the upper part of the envelope, this part being delimited by a clip (30), kept on the ground, and a second stage, following the release of the clip, in the course of which the filled state of the balloon is attained, said process being characterised in that the lower pole is locked at a distance L from the upper pole after the first inflation stage, prior to the second expansion stage, which leads to the filled state being attained.

12. Launching process according to Claim 10, in which the expansion of the envelope takes place in two stages, a first inflation stage, carried out on the ground, for producing a bubble (B) in the upper part of the envelope, this part being delimited by a clip (30), kept on the ground, and a second stage, following the release of the clip, in the course of which the filled state of the balloon is attained, said process being characterised in that, in the course of the second expansion stage of the envelope, the lower pole is locked at a distance greater than the length L from the upper pole and is then released in flight, so as to slide along the link and become locked at the distance L from the upper pole at the end of expansion.

13. Launching process according to Claim 12, characterised in that an auxiliary link (32) is placed between the load and the lower pole, so as to keep temporarily a distance greater than the length L between lower pole and upper pole, this auxiliary link being then severed in flight in the course of the second expansion stage, so as to release said lower pole and enable it to slide along the main link and to be locked in the appropriate position.

14. Launching process according to one of the Claims 10, 11, 12 or 13, characterised in that the locking of the lower pole on the link is brought about by the engagement of an element (31), integral with said pole, in a coupled element (35), fixed to the link at a distance L from the upper pole.

0031981

Fig. 1

Fig. 2

Fig. 3

Fig. 4

1

Fig. 5

bs

10

13

11

bi

Fig. 6

10

13

11

Fig.7

B

14

Fig. 8

12

0 031 981

Fig. 9

β

16

α

15

Fig. 10

β

18

21

19

20

α

22

17

23

3

Fig. 11

Fig.15

Fig.12

Fig. 13a

Fig. 13b

Fig. 14a

Fig. 14b